# EUROPEAN PATENT APPLICATION

(11) **EP 4 706 904 A1**
(43) Date of publication of application: **11.03.2026**
(21) Application number: 24841099.5
(22) Date of filing: 18.07.2024
(51) Int. Cl.: B25J 9/16

(54) **METHOD AND APPARATUS FOR EXECUTING USER TASK, AND DEVICE AND MEDIUM**

(71) Applicant: Beijing Youzhuju Network Technology Co., Ltd., Beijing 101299 (CN)
(72) Inventor: WU, Hongtao, Beijing 100028 (CN); CHEANG, Chilam, Beijing 100028 (CN); KONG, Tao, Beijing 100028 (CN)
(74) Representative: Grünecker Patent- und Rechtsanwälte PartG mbB
(86) International application number: PCT/CN2024/106255
(87) International publication number: WO 2026/016140

(57) **Abstract**

Methods, apparatuses, devices and media for performing user tasks are provided. In one method, a user task is received from a user, the user task instructing a robotic device to sort a plurality of objects within a first range in a physical space. An image comprising the plurality of objects is acquired. For a first object of the plurality of objects, a first destination location of the first object in the physical space is determined based on the image. The robotic device moves the first object to the first destination location. Utilizing example embodiments in the disclosure, a robot device can perform user tasks in a complex physical space, which can improve the flexibility and accuracy of the robot device in performing tasks in complex environments, and further, complete expected user tasks.

## Description

### FIELD

The example embodiments in the disclosure relate generally to the field of robotics, and particularly to methods, apparatuses, devices, and computer-readable storage media for using robots to perform user tasks.

### BACKGROUND

Robotics has developed rapidly and has been widely used in many technical fields. A variety of specialized robotic devices have now been developed; for example, robots can be used in industrial environments to perform many tasks such as processing, gripping, sorting, and packaging. As another example, cleaning robots, window-washing robots, and so on, have been developed for use in home environments. However, robots typically can only perform preset fixed tasks and cannot perform different user tasks according to user requirements.

### SUMMARY

In a first aspect in the disclosure, a method for performing a user task is provided. In the method, a user task from a user is received, where the user task instructs a robotic device to sort a plurality of objects within a first range in a physical space; an image including a plurality of objects is acquired; for a first object among the plurality of objects, a first destination location of the first object in the physical space is determined based on the image; and the robotic device moves the first object to the first destination location.

In a second aspect in the disclosure, an apparatus for performing a user task is provided. The apparatus includes: a receiving module configured to receive a user task from a user, where the user task instructs a robotic device to sort a plurality of objects within a first range in a physical space; an acquiring module configured to acquire an image including the plurality of objects; a determining module configured to determine, for a first object among the plurality of objects, a first destination location of the first object in the physical space based on the image; and an execution module configured to cause the robotic device to move the first object to the first destination location.

In a third aspect in the disclosure, an electronic device is provided. The electronic device includes: at least one processing unit; and at least one memory coupled to the at least one processing unit and storing instructions for execution by the at least one processing unit, where the instructions, when executed by the at least one processing unit, cause the electronic device to perform the method of the first aspect in the disclosure.

In a fourth aspect in the disclosure, a computer-readable storage medium is provided, having stored thereon a computer program, the computer program, when executed by a processor, causing the processor to perform the method according to the first aspect in the disclosure.

In a fifth aspect in the disclosure, a computer program product is provided, including a computer program, where the computer program, when executed by a processor, causes the processor to perform the method according to the first aspect in the disclosure.

It should be understood that the features described in this Summary are not intended to be exhaustive or to limit the scope of the disclosure to the precise forms disclosed. Other features and advantages of the disclosure will become apparent from the following detailed description.

### BRIEF DESCRIPTION OF THE DRAWINGS

The foregoing and other features, aspects, and advantages of the embodiments in the disclosure will become more apparent from the following detailed description, taken in conjunction with the accompanying drawings, in which like reference characters refer to like parts throughout the different views unless otherwise specified:
FIG. 1 illustrates a block diagram of an application environment according to an example embodiment in the disclosure;
FIG. 2 illustrates a block diagram for performing user tasks, according to some embodiments in the disclosure;
FIG. 3 illustrates a block diagram of an image acquisition process according to some embodiments in the disclosure;
FIG. 4 illustrates a block diagram of a process of moving objects, according to some embodiments in the disclosure;
FIG. 5 illustrates a block diagram of a process of invoking a model, according to some embodiments in the disclosure;
FIG. 6 illustrates a block diagram of a process of invoking an action model, according to some embodiments in the disclosure;
FIG. 7 illustrates a flow chart of a method for performing a user task, according to some embodiments in the disclosure;
FIG. 8 illustrates a block diagram of an apparatus for performing a user task, according to some embodiments in the disclosure; and
FIG. 9 illustrates a block diagram of a device capable of implementing various embodiments in the disclosure.

### DETAILED DESCRIPTION

The embodiments in the disclosure are described in further detail below with reference to the accompanying drawings. While certain embodiments in the disclosure are shown in the drawings, it is to be understood that the disclosure may be embodied in various forms and should not be construed as limited to the embodiments set forth herein; rather, these embodiments are provided so that this disclosure will be thorough and complete, and will fully convey the scope of the disclosure to those skilled in the art. It should be understood that the accompanying drawings and the embodiments described herein are for illustrative purposes only and do not limit the scope of the disclosure.

In the description of the embodiments in the disclosure, the terms "comprising", "including" and their similar terms should be understood as open inclusion, i.e., "including but not limited to." The term "based on" should be understood as "at least partially based on." The term "an embodiment" or "the embodiment" should be understood as "at least one embodiment." The term "some embodiments" should be understood as "at least some embodiments." Further explicit and implicit definitions may also be included below. As used herein, the term "model" may represent a correlation between various data. For example, the above correlation may be obtained based on various technical solutions currently known and/or to be developed in the future.

It is understood that data involved in this technical solution (including but not limited to the data itself, the acquisition or use of data) shall comply with the requirements of corresponding laws, regulations, and relevant provisions.

It is understood that before using the technical solutions disclosed in the embodiments in the disclosure, the user shall be informed of the type, scope of use, usage scenarios, etc., of the personal information involved in the disclosure and obtain the user's authorization in an appropriate manner according to relevant laws and regulations.

For example, in response to receiving a user's active request, prompt information is sent to the user to explicitly inform the user that the requested operation requires the acquisition and use of the user's personal information. Thus, the user can independently choose whether to provide personal information to the software or hardware such as the electronic device, application, server or storage medium that performs the operation in the disclosure according to the prompt information.

As an optional but non-limiting embodiment, in response to receiving a user' s active request, the manner of sending prompt information to the user may be, for example, in the form of a pop-up window, in which the prompt information may be presented in text. In addition, the pop-up window may also carry selection controls for the user to choose "agree" or "disagree" to provide personal information to the electronic device.

It is understood that the above notification and user authorization process are only illustrative and do not limit the embodiments in the disclosure, and other methods that meet relevant laws and regulations may also be applied to the embodiments in the disclosure.

The term "in response to" as used herein refers to a state where a corresponding event occurs, or a condition is met. It will be understood that the timing of execution of a subsequent action performed in response to the event or condition is not necessarily strongly correlated with the time of the event or condition. For example, in some cases, the subsequent action may be performed immediately upon the occurrence of the event or condition; in other cases, the subsequent action may be performed sometime after the occurrence of the event or condition.

### EXAMPLE ENVIRONMENT

In recent years, robotics and machine learning technologies have been widely applied in various application scenarios. However, robots typically can only perform preset fixed tasks and cannot perform different user tasks according to user needs. In particular, in complex application environments, it is difficult for robotic devices to determine user needs and then execute corresponding tasks.

Simple robotic devices have been developed to perform specific tasks. However, such simple robotic devices cannot understand complex user instructions and cannot perform desired tasks according to user instructions in complex physical spaces. In this case, it is desired to control the operation of the robot in an effective manner to perform the desired task.

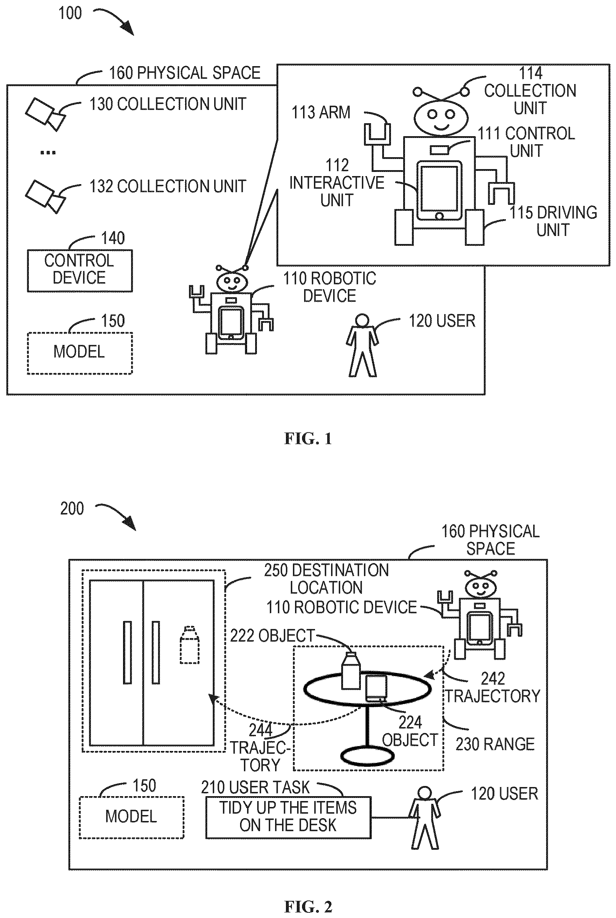

According to an example embodiment in the disclosure, a method for performing a user task is proposed. Referring to FIG. 1, which describes an application environment according to an example embodiment in the disclosure, FIG. 1 shows a block diagram 100 of the application environment according to an example embodiment in the disclosure. As shown in FIG. 1, the robot device 110 and the user 120 may be located in a physical space 160, and the user 120 may control the robot device 110 to perform various tasks. The physical space 160 may include, but is not limited to, one or more rooms. For example, in a home environment, the physical space 160 may include, but is not limited to, a living room, a bedroom, a study, a kitchen, a bathroom, etc., or a combination of one or more of the above.

As shown in FIG. 1, the robotic device 110 may include a plurality of parts. For example, a control unit 111 may serve as the control center of the robotic device 110. Applications may be loaded into the control unit 111 to control various parts of the robotic device. The user 120 may use an interactive unit 112 to interact with the robotic device 110, for example, by inputting control commands to the robotic device 110 to perform a desired task using the robotic device 110. The robotic device 110 may include an arm 113 for performing actions such as gripping and releasing. For example, the arm 113 can grip an object and move the object to a desired location, and so on.

Alternatively and/or additionally, the robotic device 110 may also include a collection unit 114. Here, the collection unit 114 may include various types, such as an image collection unit, a sound collection unit, and so on. Alternatively, and/or additionally, the robotic device 110 may further include a sensing unit for detecting surrounding objects, for example, detecting the distance between the robot and surrounding objects based on lasers, and so on. The robotic device 110 may also include a driving unit 115. For example, the robotic device 110 may be deployed on a movable base, and the driving unit 115 may drive the wheels of the base to move along a desired path.

The physical environment 160 may include one or more collection units 130, ..., and 132. For example, one or more image acquisition devices may be deployed in a room to acquire images of the room from various angles. The physical environment 160 may include a control device 140, which may control one or more collection units 130, ..., and 132 via a network (not shown), and so on. Alternatively, and/or additionally, in a smart home environment, the control device 140 may control various electrical appliances in the physical space 160.

Alternatively and/or additionally, a machine learning model (e.g., model 150) may be provided to manage the physical space 160. It should be understood that although FIG. 1 shows the model 150 located within the physical space 160, alternatively and/or additionally, the model 150 may be located at a remote device outside the physical space 160, and the control device 140, robotic device 110 or other devices may access the remote model 150 via a network.

Model 150 may include one or more models. If model 150 includes a plurality of models, these models may include a plurality of types of models. Model 150 may include, for example, at least a language model (LM) and an action model. The language model, learned from a large corpus, has question-and-answer capabilities. The action model can control the robotic device 110 to perform various actions. Model 150 may also include, for example, an image recognition model, a text recognition model, etc.

As shown in FIG. 1, the user 120 can instruct the robotic device 110 to manipulate various objects in the physical space 160 (Not 110). Here, the objects can be various items in a home environment. For example, the user 120 can instruct the robotic device 110 to find a certain object in the physical space 160; or the user 120 can instruct the robotic device 110 to place the found object at a designated location, and so on.

### Summary of Task Execution

To at least partially address the shortcomings in the prior art, an example embodiment in the disclosure proposes a method for performing a user task. Referring to FIG. 2, which describes an overview of an example embodiment in the disclosure, FIG. 2 shows a block diagram 200 for performing a user task, according to some embodiments in the disclosure.

As shown in FIG. 2, the robotic device 110 in the physical space 160 can receive the user task 210 from the user 120. Here, the user task 210 may instruct the robotic device 110 to sort a plurality of objects within a designated range (e.g., range 230, which may also be referred to as a first range) in the physical space 160. For example, the user 120 can say in natural language "tidy up the items on the desk." In the example of FIG. 2, the first range is the "desk," and the plurality of objects are the objects placed on the desk, including object 222 and object 224. The robotic device 110 can acquire an image including the plurality of objects. For example, the image may be acquired via at least one of collection units 114, 130, ..., and 132.

For a first object among the plurality of objects, a first destination location of the first object in the physical space is determined based on the image. The first object may be any suitable object among the plurality of objects. The first destination location may be the location where the first object should be placed. For example, in a home environment, a desk includes a bottle of water (i.e., object 222) and a book (i.e., object 224). Object 222 should be placed in a refrigerator, kitchen or other location. Therefore, if object 222 is the first object, the first destination location may be the refrigerator (e.g., destination location 250) and/or the kitchen. The book should be placed on a bookshelf, in a study or other location. Therefore, if the book is the first object, the first destination location may be the bookshelf and/or the study. At this time, the robotic device 110 can be instructed to move the first object to the first destination location. For example, the robotic device 110 can be instructed to move object 222 to destination location 250.

According to some embodiments in the disclosure, the methods described above may be performed at any computing device having computing capabilities. For example, the methods described above may be performed using an application deployed at the robotic device 110. Alternatively, and/or additionally, an application may be deployed at the control device 140 to perform the above methods. Specifically, the powerful processing capability of model 150 may be invoked to find the first range that may include the plurality of objects, and the destination location of each of the plurality of objects in the physical space. Then, the robotic device 110 can move along path 242 to range 230 and move object 222 among the plurality of objects within range 230 along path 244 to its destination location 250 in the physical space 160.

Utilizing the example embodiments in the disclosure, the robotic device can be controlled to move a plurality of objects within a first range to their corresponding destination locations. The flexibility and accuracy of the robotic device in performing tasks in complex environments can be improved, thereby completing the expected user tasks.

### DETAILED PROCESS OF TASK EXECUTION

Having described an overview according to some embodiments in the disclosure, more details regarding performing a user task will be described below. For ease of description, only controlling the robotic device 110 to tidy up items on the desk is used as an example below to describe more details of performing a user task.

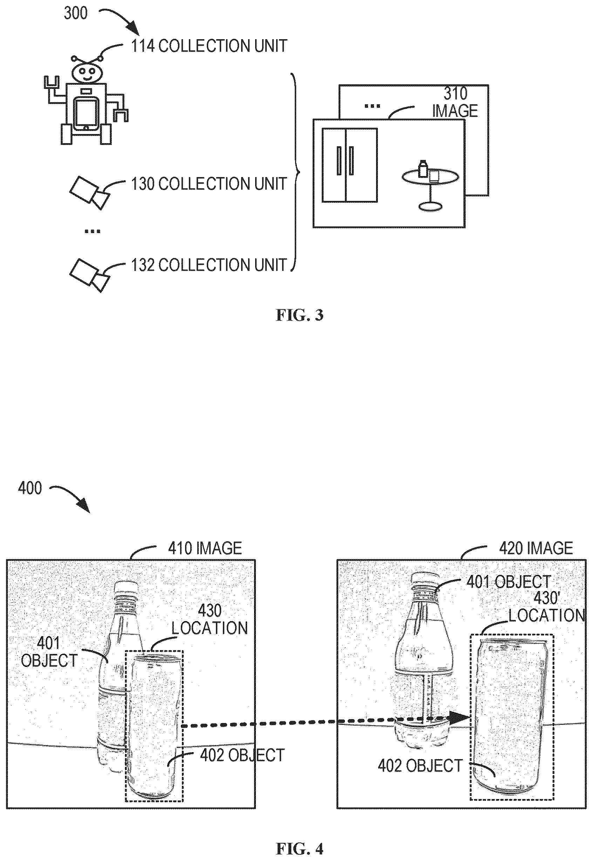

According to some embodiments in the disclosure, images may come from at least one of the following: an acquisition device at the robotic device, an acquisition device in a first physical space, and an acquisition device in a second physical space. Referring to FIG. 3 for more details on image acquisition, FIG. 3 shows a block diagram 300 of an image acquisition process according to some embodiments in the disclosure. As shown in FIG. 3, image(s) 310 of the physical space 160 may be acquired from the collection unit 114 at the robotic device 110. Since the robotic device 110 can move freely in the physical space 160, the collection unit 114 can acquire images of various locations in the physical space, which facilitates finding the first range and the plurality of objects.

Alternatively and/or additionally, images of the physical space 160 may be acquired from collection units 130, ..., and 132. Here, collection units 130, ..., and 132 may be pre-deployed at designated locations within the physical space 160, such as at the corners of the ceiling, etc. In this way, images of the physical space 160 taken from a top-down perspective can be obtained, which facilitates understanding the layout of the physical space 160 as a whole. This can help determine the first range and the first destination location corresponding to the first object within the first range.

According to some embodiments in the disclosure, an image of the physical space 160 where the robotic device 110 is located may be acquired, and the first range may be located based on the image. For example, if the user 120 says in natural language "tidy up the items on the desk," then the user task 210 instructs the robotic device 110 to sort the plurality of objects on the desk. The range 230 where the desk is located may be determined based on the image of the physical space 160. For example, a prompt may be obtained for locating the first range: "Please determine the location of the desk in the following image," and the model may be used to locate the range 230. Then, the robotic device 110 may be instructed to move to the range 230.

According to some embodiments in the disclosure, images of the plurality of objects within the first range may be acquired at the same time as acquiring the image of the physical space 160 where the robotic device 110 is located. Exemplarily, images of the plurality of objects within the first range may be determined based on the image of the physical space 160. For example, the images of the plurality of objects within the first range may be cropped from the image of the physical space 160. Alternatively, or additionally, according to some embodiments in the disclosure, images of the plurality of objects within the first range may also be acquired in response to the robotic device 110 moving to the first range. Exemplarily, in response to the robotic device 110 moving to the first range, the collection unit 114 at the robotic device 110 may be used to acquire images of the plurality of objects within the first range.

According to some embodiments in the disclosure, the image of the plurality of objects may include one or more images. If the image of the plurality of objects includes a plurality of images, each image may correspond to an object. For example, the images of the plurality of objects may include a plurality of images each corresponding to a respective object. For the first object, the location of the first object may be adjusted to acquire an image of the first object. At this time, the position of the acquisition device used to acquire the image may be adjusted (e.g., an angle avoiding occlusion may be sought) to acquire the image of the first object. For example, for the plurality of objects within the range 230, the location of the object 222, and/or the position of the robotic device 110 may be adjusted so that the robotic device 110 can acquire an image including only object 222 using the collection unit 114. In this way, images corresponding to each of the plurality of objects may be acquired separately, which can improve the accuracy of the image corresponding to each object, thereby improving the accuracy of subsequent task execution based on images.

If the image of the plurality of objects includes only one image, it can be determined whether there is an occlusion relationship between the plurality of objects. Any appropriate method can be used to determine whether there is an occlusion relationship between the plurality of objects. For example, the model 150 can be used to determine whether there is an occlusion relationship between the plurality of objects. As another example, the occlusion relationship can also be determined based on any suitable rule or algorithm. Alternatively, or additionally, prompt information may be provided to the user 120 to determine whether there is an occlusion relationship between the plurality of objects. The determination result provided by the user 120 can be received, and whether there is an occlusion relationship between the plurality of objects can be determined based on the determination result. Alternatively, and/or additionally, if there is an occlusion relationship, the user may be instructed to eliminate the occlusion relationship.

If there is no occlusion relationship between the plurality of objects, an image including the plurality of objects may be acquired directly. If there is an occlusion relationship between the plurality of objects, in response to determining that there is an occlusion relationship between the plurality of objects, the robotic device 110 may be instructed to move at least one of the plurality of objects and then acquire an image including the plurality of objects. Referring to FIG. 4 for more details, FIG. 4 shows a block diagram 400 of a process for moving an object, according to some embodiments in the disclosure. As shown in FIG. 4, object 402 is located in front of object 401 and occludes object 401. At this time, the robotic device may be instructed to move object 402 from location 430 to a location that does not occlude object 401 (such as location 430' in image 420).

According to some embodiments in the disclosure, a target location can be determined, and the robotic device can be instructed to move object 402 to the target location. For example, model 150 can be used to generate actions to control the robotic device to move object 402 from location 430 to location 430'. In this way, the robotic device can be supported in handling complex problems in complex environments, thereby performing user tasks in a more accurate manner.

After acquiring the image corresponding to the plurality of objects, the first destination location of the first object in the physical space can be determined based on the image. According to some embodiments in the disclosure, the first type of the first object can be determined based on the image. Regarding the specific method of determining the first type of the first object, any appropriate method can be adopted. For example, the first type of the first object can be determined based on a pre-stored database. The pre-stored database can store a plurality of objects and their corresponding types. The first object can be retrieved in the pre-stored database to determine its first type.

As another example, a plurality of text items (e.g., labels on the objects) respectively associated with the plurality of objects can be identified from the image (e.g., using model 150 to identify the image). For the first object, the first type can be determined based on the first text item associated with the first object. Taking object 222 as an example, object 222 is a bottle of water, and the text item associated with object 222 may be a text item on the water bottle packaging. It can be determined that object 222 is a bottle of water based on the text item on the water bottle packaging.

According to some embodiments in the disclosure, the location of a second object of the first type in the physical space can also be determined so as to determine the first destination location based on the location of the second object. It is understood that any appropriate method can be used to determine the location of the second object. For example, the location of the second object can be determined based on the image of the physical space 160 where the robotic device 110 is located. Taking the first object as a bottle of water, the image of the physical space 160 where the robotic device 110 is located can be acquired, and the locations of other water bottles in the physical space 160 can be determined based on this image. For example, if all other bottles of water are placed in the kitchen, the location of the second object can be determined as the kitchen. As another example, the location of the second object can also be determined based on predetermined rules or algorithms. Still taking the first object as a bottle of water as an example, if the predetermined rules indicate that water bottles are placed in the refrigerator, the location of the second object can be determined as the refrigerator based on the predetermined rules. It is understood that a model (e.g., model 150) can also be used to determine the location of the second object, or the user 120 can be used to manually determine the location of the second object, etc. For example, the robotic device 110 can ask the user: "Where should I put the bottle of water?" and place the bottle of water at the location specified by the user.

If a model is used to determine the location of the second object, according to some embodiments in the disclosure, a prompt can be constructed based on the image of the physical space 160 and the first type of the first object, which can be used to determine the location of the object of the first type in the image of the physical space 160. Taking the determined first type of the first object as a bottle of water as an example, the prompt can be expressed as: "Please identify the location where 'bottle of water' is placed from the following image."

The prompt can be provided to a machine learning model (e.g., model 150) to utilize the machine learning model to determine the location of the second object of the first type. The response of the machine learning model to the prompt, i.e., the model output of the machine learning model for the prompt, can indicate the location of the second object (e.g., refrigerator). Thus, the location of the second object, which is the first destination location of the first object, can be determined based on the response of the machine learning model to the prompt.

Specifically, the machine learning model can process the image, and if the image includes the second object, the model can output the location of the second object (e.g., the regional coordinates of the second object in the image, and/or directly output the image of the region where the second object is located, etc.). If the image does not include the second object, the model can output a response such as "not found." Using some embodiments in the disclosure, the image can be checked for the second object in a variety of ways, thereby improving the performance of the robotic device in detecting the location of the second image.

Alternatively or additionally, according to some embodiments in the disclosure, another physical space associated with the physical space 160 can be determined in response to determining that the image indicates that the physical space 160 where the robotic device 110 is located does not include the second object. In this case, the physical space 160 where the robotic device 110 is located can be referred to as the first physical space, and the other physical space associated with the physical space 160 can be referred to as the second physical space.

It should be understood that the second physical space here is a potential physical space that may include the first object. For example, in a home environment, since bottles of water may be placed in the refrigerator, the second physical space can be determined as the refrigerator. Specifically, in the process of determining the second physical space associated with the first physical space, a prompt for locating the second object can be obtained based on the image of the physical space 160 and the first type, and a response of the machine learning model to the prompt can be received, so as to determine the second physical space. After determining the second physical space that may include the second object, the location of the second physical space in the first physical space can be determined as the location of the second object, i.e., the first destination location of the first object.

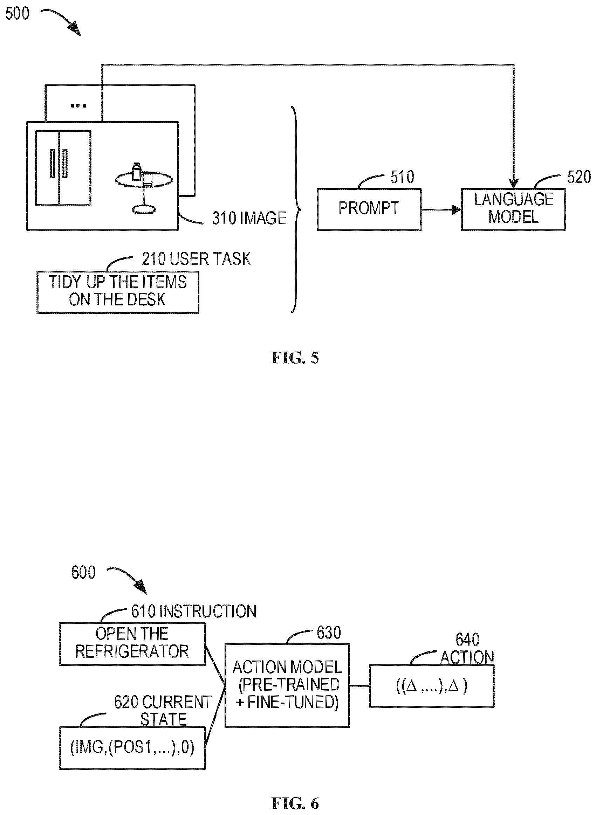

Refer to FIG. 5 for more details on determining the second physical space, which shows a block diagram 500 of a process of invoking a model according to some embodiments in the disclosure. As shown in FIG. 5, it can be determined, based on the user task 210, to move the plurality of objects on the desk (e.g., the bottle of water and the book) to their corresponding locations. For the bottle of water, a corresponding prompt 510 can be obtained based on the image 310. The prompt 510 can be expressed as, for example, "Please determine from the following image the physical space that may include 'bottle of water'," or "Where might the 'bottle of water' be placed in the following image," and so on. The prompt 510 and the image 310 can be input to the language model 520, so that the language model 520 can find the second physical space that may include the bottle of water from the image 310. The language model 520 may be, for example, a model included in model 150.

According to some embodiments in the disclosure, a message associated with the first object can be provided to the user 120 after the first destination location is determined. This message can be used to prompt the user 120 to confirm whether to move the first object to the first destination location. As for the specific method of providing the message, for example, the message can be provided to the user 120 via the display screen, voice playback device, etc., of the robotic device 110. A response from the user 120 to the message can be received, and whether to move the first object to the first destination location can be determined based on the response. If the response indicates to move the first object to the first destination location, the robotic device 110 can be instructed to move the first object to the first destination location. Thus, objects can be moved only after obtaining user confirmation, and the accuracy of task execution by the robotic device can be improved by following user instructions.

According to some embodiments in the disclosure, a motion trajectory from the location of the first object to the first destination location can also be determined based on the image of the physical space 160. It can be understood that the motion trajectory can also be determined using any appropriate method, such as using model 150, manual determination, or based on predetermined rules or algorithms. This motion trajectory can indicate, for example, how the robotic device 110 avoids obstacles in the physical space 160 to move from the location of the first object to the first destination location along a shorter path. After the motion trajectory is determined, the robotic device 110 can be instructed to move the first object to the first destination location along the motion trajectory.

According to some embodiments in the disclosure, the model 150 can be used to determine the actions to be performed by the robotic device 110 and to control the robotic device 110 to perform the actions. For example, if the first destination location is a refrigerator, the model 150 can be used to determine how to move the first object to the refrigerator (e.g., open the refrigerator, put the first object in, etc.). Exemplarily, a corresponding prompt can be constructed to ask the model 150 how to open the refrigerator. The prompt can be expressed, for example, as: "Determine how to open the refrigerator from the following image." The prompt and corresponding image (e.g., the image of the physical environment 160 including the refrigerator) can be sent to model 150.

Model 150 may return, for example: Pull the handle to open the refrigerator door. Then, the robotic device 110 can be instructed to pull the handle to open the refrigerator. Thus, using some embodiments in the disclosure, the powerful processing capability of the model can be invoked to solve unknown problems in complex environments and determine the actions to be performed by the robotic device. In this way, the capability of the robotic device to handle complex tasks can be improved, thereby performing user tasks in a more accurate manner.

According to some embodiments in the disclosure, an action model can be used to determine specific actions performed by the robotic device. See FIG. 6 for more details, which shows a block diagram 600 of the process of calling the action model, according to some embodiments in the disclosure. As shown in FIG. 6, an action model 630 can be provided. The action model 630 can determine specific actions to be performed by the robotic device based on the current state of the robotic device and instructions. The action model 630 can be a pre-trained and fine-tuned model. The action model 630 can also be a model included in model 150.

The current state 620 may include data in a plurality of aspects, such as images of the robotic device 110, images of the environment of the robotic device 110, pose data of the robotic arm (e.g., positions (POS1, ...) of each joint of the robotic arm), and the state of the tool (e.g., gripper, cutter, etc.) fixed to the end of the robotic arm. For example, 0 can be used to represent the closed state of the gripper, and 1 can be used to represent the open state of the gripper. The instruction and current state can be input to the action model 630, and then the action model can be used to determine the actions to be performed by the robotic device 110 based on the instruction and the current state. Here, actions can represent the difference between the current pose and the next pose of the robotic device 110, the difference between the current state and the next state of the tool, and so on.

An instruction 610 (e.g., "open the refrigerator") can be input to the action model 630. Here, the instruction 610 can be expressed in natural language and can be determined from the response of the language model (should be 520, not 630). Further, the current state of the robotic device 110 can be obtained, and the action model 630 can determine corresponding action 640 based on the input data. For example, the orientation, position, speed, acceleration, etc., of each joint in the arm, and/or the wheels and/or other movable devices of the robotic device at the next time point can be determined. Further, the determined action 640 can be used to control the state of the robotic device 110 at the next time point.

In this way, a model can be used to control the actions of the robotic device, model output can be used to instruct the robotic device to move the first object, the actions of the robotic device can be precisely controlled, and user tasks can be performed with higher efficiency.

It can be understood that a plurality of destination locations corresponding to each of the plurality of objects within the first range can be determined. The above-described similar methods can be used to control the robotic device 110 to sequentially move each of the plurality of objects to the corresponding destination locations. For example, the robotic device 110 can be controlled to move the bottle of water to the refrigerator, and then move the book to the bookshelf, and so on. It should be noted that if there are at least two objects of the same type among the plurality of objects, these at least two objects can be moved together. For example, if the plurality of objects includes a group of objects of the first type, and the group of objects includes at least two objects, the robotic device 110 can be instructed to move the group of objects at one time. Thereby, according to the types of different objects among the plurality of objects, a group of objects can be moved at a time, which can improve the efficiency of moving objects by the robotic device 110.

Alternatively or additionally, according to some embodiments in the disclosure, if the quantity of a group of objects of the first type among the plurality of objects satisfies a threshold condition, the robotic device 110 can be instructed to acquire a third object. The threshold condition may indicate, for example, the threshold number of objects in a group. For example, if the threshold number is 4, then in response to the number of objects included in the group of the first type reaching 4, the robotic device 110 can be instructed to obtain a third object. The third object may be another object used to move the group of objects. The third object may be a predetermined object.

For example, the user 120 can preset that the robotic device 110 can use a designated object to move a plurality of objects. For example, taking a group of water bottles as a group of objects, the third object can be any object that can help move the group of water bottles, such as a tray, basket, bag, trolley, etc. Further, the robotic device 110 can be instructed to move the group of objects to the first destination location via the third object. For example, if the third object is a tray, the robotic device 110 can be instructed to move a group of objects (e.g., a group of bottles of water) to the first destination location using the tray.

According to some embodiments in the disclosure, after moving at least one object of the first type to the first destination location, the destination location of at least one object of the second type can be determined, and at least one object of the second type can be moved to the second destination location of the object of the second type in the physical space. For example, model 150 can be used to determine how to leave the first destination location, the trajectory to return to the first range, the trajectory to move from the first range to the second destination location, etc. New images can be acquired, and new prompts can be constructed to ask the model 150 (e.g., the language model) for the next instruction. The prompt can be expressed as, for example, "Please determine the next instruction based on the following image," or "What should I do next?" etc. For example, when the robotic device has placed the bottle of water in the refrigerator, the language model can return "close the refrigerator" based on the currently received image. At this point, corresponding actions can be generated based on the instruction "close the refrigerator" and the current state of the robotic device to instruct the robotic device to close the refrigerator.

According to some embodiments in the disclosure, the priorities of the plurality of objects within the first range can also be determined, and the objects can be moved sequentially based on the priorities. Any method can be used to determine the priorities of the plurality of objects, for example, model 150 or predetermined rules can be used to determine the priorities of the plurality of objects. Exemplarily, the priority of objects that need to be frozen (e.g., ice cream, frozen meat, etc.) will be higher than the priority of objects that can be stored at room temperature. In this way, the objects with higher priority can be moved first, thereby improving the quality of task execution by the robotic device 110.

It should be understood that although the above description uses a Chinese language environment as an example to describe an example embodiment in the disclosure, alternatively and/or additionally, the technical solution of an example embodiment in the disclosure can be implemented in a plurality of language environments. For example, a robot can be controlled in Chinese, English, Japanese, French, and other environments. Specifically, the multilingual capabilities provided by machine learning technology can be used to control robots in application environments of different languages. Further, although the above description uses retrieving bottled water as an example to illustrate the process of using a robot device to perform user tasks, alternatively and/or additionally, a robot device can be controlled to perform other user tasks, such as finding other items in the room, placing a certain item at a specified location, and so on.

According to some embodiments in the disclosure, the user can interact with the robotic device via language, actions, gestures, etc. For example, the user can speak the user task to be performed, or predefine an action to designate the user task, and so on. Specifically, the user can make the action of placing items, and this action can be used to trigger the robotic device to perform the user task of sorting and placing items. When the action is recognized from the captured image sequence, the robotic device can automatically ask the user whether it is necessary to sort and place the items and inquire about the range to be processed. If a positive response is received, the robotic device can perform the user task.

Alternatively and/or additionally, the user can interact with the robotic device via interactive unit 112. For example, the user inputs a task represented by text and/or image and controls the robotic device to execute the task. Alternatively, and/or additionally, the user can specify the execution condition of the task, such as executing the task immediately, executing the task after a predetermined time, or executing the task when a predetermined condition is met (e.g., after the user finishes eating), and so on.

According to some embodiments in the disclosure, the robotic device can provide various messages to the user. For example, for the first object (e.g., bottle of water), if the physical space includes a plurality of first destination locations (e.g., refrigerator and kitchen), the robotic device can ask the user whether the water bottle should be moved to the refrigerator or to the kitchen. As another example, if the robotic device does not find the first destination location, the robotic device can ask the user where to move the first object, and so on.

According to some embodiments in the disclosure, various positioning algorithms can be used to determine the locations of the robot device and each object in the physical environment. For example, a Global Positioning System (GPS) can be deployed at the robotic device, and satellite signals can be used to determine the precise location of the robotic device. Alternatively, and/or additionally, a communication unit can be deployed at the robotic device, and the location of the robotic device can be determined using the signal between the communication unit and a base station and utilizing the communication network. Alternatively, and/or additionally, Wi-Fi access points can be deployed in the physical space, and the communication unit at the robotic device can interact with Wi-Fi hotspots to determine the location via Wi-Fi signal strength and the location of known Wi-Fi access points. Alternatively, and/or additionally, the communication unit at the robotic device can support Bluetooth functionality, in which case Bluetooth signals and known Bluetooth device locations can be used to determine the location of nearby devices. An inertial navigation system can be deployed at the robotic device, and accelerometers and gyroscopes can be used to measure and calculate the movement and orientation of the device in space, thereby determining the location of the robotic device.

Alternatively and/or additionally, a visual positioning system can be used to determine the locations of the robotic device and/or each object. A map of the physical space can be pre-acquired, and the locations of the objects are marked on the map. The robotic device can utilize an echo detection unit to detect the distance to surrounding objects and combined with the acquired images and the map of the physical space, determine the specific locations of each object. Specifically, computer-aided design (CAD) and geographic information systems (GIS) can be used, and positioning algorithms can be utilized to determine locations. Alternatively, and/or additionally, tracking units can be deployed at important objects in the physical space, for example, tracking units can be added to remote controls of home appliances (e.g., TV remote control, air conditioner remote control), so that the robotic device can acquire the precise location of important objects in a timely manner.

According to some embodiments in the disclosure, the original location of the robotic device itself and the desired destination location can be determined based on the methods described above. The robotic device can determine a path from the original location to the destination location. For example, it can continuously acquire surrounding environment images and continuously update the path to ensure obstacle avoidance, enabling the robot device to move to the destination location along the path.

According to some embodiments in the disclosure, after arriving at the destination location, the robot device can perform a designated task. For example, it can acquire the designated object and move it to the corresponding location. A language model and/or knowledge base can be used to determine constraints, i.e., constraints that should be followed during task execution. For example, images and corresponding prompts can be obtained and input to the language model to receive constraints from the language model. Example prompts could be: "Based on the following image, please determine the constraints that should be followed while moving object XXX," or "Please identify precautions while moving object XXX," etc.

At this point, it can be determined that during the movement of the object (e.g., bottle of water, plate, bowl, etc.), the original pose of the object should be maintained (e.g., kept upright and not tilted). Further, constraints can be input to the action model, at which point the sequence of actions output by the action model will perform the corresponding task while ensuring the constraints. Utilizing some embodiments in the disclosure, the safety of the robot device's operation can be ensured to prevent accidental damage to an object, etc.

Utilizing the example embodiments in the disclosure, the robotic device can perform user tasks in complex physical spaces. In this way, the robot device can independently move the plurality of objects within the first range to their corresponding destination locations. The flexibility and accuracy of the robot device in performing tasks in complex environments can be improved, thereby completing the expected user tasks.

### EXAMPLE PROCESS

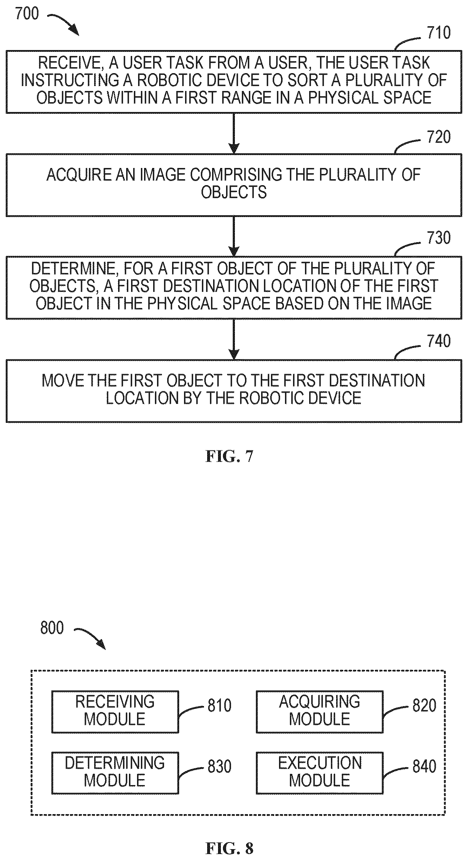

FIG. 7 shows a flowchart of a method 700 for performing a user task according to some embodiments in the disclosure. At block 710, a user task is received from a user, the user task instructing the robotic device to sort a plurality of objects within a first range in the physical space. At block 720, an image including the plurality of objects is acquired. At block 730, for a first object among the plurality of objects, a first destination location for the first object in the physical space is determined based on the image. At block 740, the robot device moves the first object to the first destination location.

According to some embodiments in the disclosure, acquiring the image includes: the robot device moving at least one of the plurality of objects in response to determining that there is an occlusion relationship between the plurality of objects; and acquiring the image including the plurality of objects.

According to some embodiments in the disclosure, the image of the first object is determined based on: adjusting the location of the first object to acquire the image of the first object; and adjusting the location of the acquisition device used for acquiring the image to acquire the image of the first object.

According to some embodiments in the disclosure, the method 700 further includes: acquiring an image of the physical space in which the robot device is located; locating the first range based on the image; and moving the robot device to the first range.

According to some embodiments in the disclosure, determining the first destination location includes: determining a first type of the first object based on the image; determining a location of a second object of the first type in the physical space; and determining the first destination location based on the location of the second object.

According to some embodiments in the disclosure, determining the first type of the first object further includes: identifying from the image a plurality of text items each associated with a respective object of the plurality of objects; and determining the first type based on, for the first object, a first text item of the plurality of text items that is associated with the first object.

According to some embodiments in the disclosure, determining the location of the second object includes at least one of: identifying the second object in an image of the physical space to determine the location of the second object.

According to some embodiments in the disclosure, determining the location of the second object includes at least one of: constructing a prompt based on an image of the physical space and the first type of the first object, the prompt for determining the location of the object of the first type in the image of the physical space; and determining the location of the second object based on a response from the machine learning model to the prompt.

According to some embodiments in the disclosure, moving the first object to the first destination location by the robot device includes: determining a movement trajectory from the location of the first object to the first destination location based on an image of the physical space; and moving the first object to the first destination location along the movement trajectory by the robot device.

According to some embodiments in the disclosure, moving the first object to the first destination location by the robot device includes: providing a message related to the first object to the user; and moving the first object to the first destination location by the robot device in response to receiving a response from the user for the message.

According to some embodiments in the disclosure, moving the first object to the first destination location by the robot device includes: obtaining, by the robot device, a third object in response to determining that the number of a group of objects of the first type the plurality of objects satisfies a threshold; and moving the group of objects to the first destination location via the third object by the robot device.

### EXAMPLE APPARATUS AND DEVICE

FIG. 8 illustrates a block diagram of an apparatus 800 for performing a user task, according to some embodiments in the disclosure. The apparatus 800 includes: a receiving module 810 configured to receive a user task from a user, the user task instructing the robotic device to sort a plurality of objects within a first range in a physical space; an acquiring module 820 configured to acquire an image including the plurality of objects; a determining module 830 configured to determine, for a first object of the plurality of objects, a first destination location of the first object in the physical space based on the image; and an execution module 840 configured to cause the robotic device to move the first object to the first destination location.

According to some embodiments, the acquiring module 820 is further configured to: cause the robot device to move at least one object of the plurality of objects in response to determining that there is an occlusion relationship between the plurality of objects; and acquire the image including the plurality of objects.

According to some embodiments, the image of the first object is determined based on: adjusting a location of the first object to acquire the image of the first object; and adjusting a position of an image acquisition device used to acquire the image, to acquire the image of the first object.

According to some embodiments, the acquiring module 820 is further configured to: acquire an image of a physical space in which the robot device is located; locate the first range based on the image; and cause the robotic device to move to the first range.

According to some embodiments, the determining module 830 is further configured to: determine a first type of the first object based on the image; determine a location of a second object of the first type in the physical space; and determine the first destination location based on the location of the second object.

According to some embodiments, the determining module 830 is further configured to: identify, from the image, a plurality of text items respectively associated with the plurality of objects; for the first object among the plurality of objects, determine the first type based on a first text item among the plurality of text items associated with the first object.

According to some embodiments, the determining module 830 is further configured to: identify the second object in the image of the physical space, to determine a location of the second object.

According to some embodiments, the determining module 830 is further configured to: construct a prompt based on the image of the physical space and the first type of the first object, the prompt for determining the location of an object of the first type in the image of the physical space; and determine the location of the second object based on a response of a machine learning model to the prompt.

According to some embodiments, the execution module 840 is further configured to: determine a movement trajectory from the location of the first object to the first destination location based on the image of the physical space; and cause the robotic device to move the first object to the first destination location according to the movement trajectory.

According to some embodiments, the execution module 840 is further configured to: provide a message associated with the first object to the user; and cause the robotic device to move the first object to the first destination location in response to receiving a response to the message from the user.

According to some embodiments, the execution module 840 is further configured to: in response to determining that a quantity of a group of objects of the first type from among the plurality of objects satisfies a threshold condition, cause the robotic device to obtain a third object; cause the robotic device to move the group of objects to the first destination location via the third object.

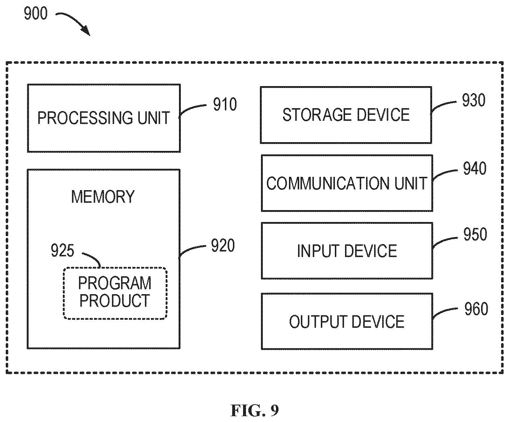

FIG. 9 illustrates a block diagram of a device 900 that can implement various embodiments in the disclosure. It should be understood that the computing device 900 shown in FIG. 9 is merely example and should not be construed as limiting the functionality and scope of the embodiments described herein in any way. The computing device 900 shown in FIG. 9 may be used to implement the methods described above.

As illustrated in FIG. 9, computing device 900 is in the form of a general-purpose computing device. The components of computing device 900 can include, but are not limited to, one or more processors or processing units 910, a memory 920, a storage device 930, one or more communication units 940, one or more input devices 950, and one or more output devices 960. The processing unit 910 can be an actual or virtual processor and is capable of performing various processes according to programs stored in memory 920. In a multi-processor system, multiple processing units execute computer-executable instructions in parallel to improve the parallel processing capabilities of the computing device 900.

The computing device 900 typically includes a variety of computer readable media. Such media may be any available media that is accessible by the computing device 900 and includes both volatile and non-volatile media, removable and non-removable media. The memory 920 can be volatile memory (such as registers, cache, random access memory (RAM)), non-volatile memory (such as read only memory (ROM), electrically erasable programmable read only memory (EEPROM), flash memory), or a combination thereof. The storage device 930 may be removable or non-removable media and can include machine-readable media, such as a flash drive, disk, or any other medium which can be used to store information and/or data (e.g., training data used for training), and which can be accessed within the computing device 900.

Computing device 900 may further include additional removable/non-removable, volatile/non-volatile computer storage media. By way of example, and not limitation, memory 920 may include computer storage media and communication media. Although not shown in FIG. 9, disk drives for reading from or writing to removable, non-volatile disks (e.g., "floppy disks") and CD drives for reading from or writing to removable, non-volatile optical disks may also be provided. In such cases, each drive can be connected to the bus (not shown) via one or more data media interfaces. Memory 920 may include computer program product 925 having one or more program modules configured to carry out various methods or actions of the various embodiments in the disclosure.

The communications unit 940 allows for communication with other computing devices via a communications medium. Additionally, the functionalities of the components of computing device 900 may be implemented by a single computing cluster, or multiple computing machines that are capable of communicating via a communicative coupling. Consequently, the computing device 900 may operate in a networked environment using logical connections to one or more other servers, networked personal computers (PCs), or other network nodes.

Input device 950 may be one or more input devices such as a mouse, keyboard, trackball and the like. Output device 960 may be one or more output devices such as a display, speakers, a printer, and the like. The computing device 900 may also communicate, as required, via the communications unit 940 with one or more external devices (not shown), such as a storage device, a display device, etc.; communicate with one or more devices that enable a user to interact with computing device 900; or communicate with any device (e.g., network card, modem, etc.) that enables computing device 900 to communicate with one or more other computing devices. Such communication may be performed via an input/output (I/O) interface (not shown).

According to example embodiments in the disclosure, a computer-readable storage medium is provided, on which computer-executable instructions are stored, where the computer-executable instructions are executed by a processor to implement the methods described above. According to example embodiments in the disclosure, a computer program product is also provided, where the computer program product is stored tangibly on a non-transitory computer-readable medium and includes computer-executable instructions, where the computer-executable instructions are executed by a processor to implement the methods described above. According to example embodiments in the disclosure, a computer program product is also provided, on which a computer program is stored, where the program, when executed by a processor, implements the methods described above.

The various aspects in the disclosure are described herein with reference to flowchart illustrations and/or block diagrams of methods, apparatuses, devices, and computer program products according to embodiments in the disclosure. It will be understood that each block of the flowchart illustrations and/or block diagrams, and combinations of blocks in the flowchart illustrations and/or block diagrams, can be implemented by computer program instructions.

These computer-readable program instructions may be provided to a processor of a general purpose computer, special purpose computer, or other programmable data processing apparatus to produce a machine, thereby enabling the instructions, when executed by the processor of the computer or other programmable data processing apparatus, to create means for implementing the functions/acts specified in the flowchart and/or block diagram block or blocks. These computer-readable program instructions may also be stored in a computer-readable storage medium that can direct a computer, other programmable data processing apparatus, and/or other devices to function in a particular manner, such that the instructions stored in the computer-readable storage medium include an article of manufacture including instructions which implement the functions/acts specified in the flowchart and/or block diagram block or blocks.

The computer program instructions may also be loaded onto a computer, other programmable data processing apparatus, or other device to cause a series of operational steps to be performed on the computer, other programmable apparatus or other device to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible embodiments of systems, methods and computer program products according to various embodiments in the disclosure. In this regard, each block in the flowchart or block diagrams may represent a module, segment, or portion of code, which includes one or more executable instructions for implementing the specified logical function(s). It should also be noted that, in some alternative embodiments, the functions noted in the block may occur out of the order noted in the figures. For example, two continuous blocks may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems which perform the specified functions or acts, or combinations of special purpose hardware and computer instructions.

The various embodiments in the disclosure have been described. These and other embodiments are within the scope of the following claims. The foregoing descriptions are illustrative and not exhaustive and are not limited to the embodiments disclosed. Many modifications and variations will be apparent to practitioners skilled in the art without departing from the scope and spirit of the disclosed embodiments. The terminology used herein is chosen so as to best explain the principles of the embodiments, the practical application or technical improvements to the industry, or to enable others skilled in the art to understand the embodiments disclosed herein.

## Claims

1. A method for performing a user task, comprising:
receiving, a user task from a user, the user task instructing a robotic device to sort a plurality of objects within a first range in a physical space;
acquiring an image comprising the plurality of objects;
determining, for a first object of the plurality of objects, a first destination location of the first object in the physical space based on the image; and
moving the first object to the first destination location by the robotic device.

2. The method of claim 1, wherein acquiring the image comprises:
in response to determining that there is an occlusion relationship between the plurality of objects, moving at least one of the plurality of objects by the robotic device; and
acquiring the image comprising the plurality of objects.

3. The method of claim 1, wherein the image of the first object is determined based on:
adjusting a location of the first object to acquire the image of the first object; and
adjusting a position of an image acquisition device configured to acquire the image to acquire the image of the first object.

4. The method of claim 1, further comprising:
acquiring an image of the physical space in which the robot device is located;
locating the first range based on the image; and
the robotic device moving to the first range.

5. The method of claim 1, wherein determining the first destination location comprises:
determining a first type of the first object based on the image;
determining a location of a second object of the first type in the physical space; and
determining the first destination location based on the location of the second object.

6. The method of claim 5, wherein determining the first type of the first object further comprises:
identifying, from the image, a plurality of text items associated respectively with the plurality of objects;
determining, for the first object of the plurality of objects, the first type based on a first text item associated with the first object of the plurality of text items .

7. The method of claim 5, wherein determining the location of the second object comprises at least one of: identifying the second object in the image of the physical space to determine the location of the second object.

8. The method of claim 5, wherein determining the location of the second object comprises at least one of:
constructing a prompt based on the image of the physical space and the first type of the first object, the prompt is for determining the location of an object of the first type in the image of the physical space; and
determining the location of the second object based on a response to the prompt from a machine learning model.

9. The method of claim 1, wherein moving the first object to the first destination location by the robotic device comprises:
determining a movement trajectory from the location of the first object to the first destination location based on the image of the physical space; and
moving the first object to the first destination location according to the movement trajectory by the robotic device.

10. The method of claim 1, wherein moving the first object to the first destination location by the robotic device comprises:
providing, to the user, a message associated with the first object; and
in response to receiving a response to the message from the user, moving the first object to the first destination location by the robotic device.

11. The method of claim 5, wherein moving the first object to the first destination location by the robotic device comprises:
in response to a determination that the number of a group of objects of the first type in the plurality of objects meets a threshold condition, obtaining a third object by the robotic device; and
moving, by the robotic device, the group of objects to the first destination location via the third object.

12. An apparatus for performing a user task, comprising:
a receiving module configured to receive, a user task from a user, the user task instructing a robotic device to sort a plurality of objects within a first range in a physical space;
an acquiring module configured to acquire an image comprising the plurality of objects;
a determining module configured to determine, for a first object of the plurality of objects, a first destination location of the first object in the physical space, based on the image; and
an execution module configured to cause the robotic device to move the first object to the first destination location.

13. An electronic device, comprising:
at least one processing unit; and
at least one memory coupled to the at least one processing unit and storing instructions for execution by the at least one processing unit, wherein the instructions, when executed by the at least one processing unit, cause the electronic device to perform the method of any of claims 1-11.

14. A computer-readable storage medium storing a computer program, the computer program, when executed by a processor, causes the processor to perform the method of any of claims 1-11.

15. A computer program product, comprising a computer program, wherein the computer program, when executed by a processor, causes the processor to perform the method of any one of claims 1-11.
